# EUROPEAN PATENT SPECIFICATION

(11) **EP 3 567 948 B1**
(45) Date of publication and mention of the grant of the patent: **04.11.2026**
(21) Application number: 17890582.4
(22) Date of filing: 19.12.2017
(51) Int. Cl.: H04L 27/26, H04W 72/04, H04W 56/00, H04L 27/00, H04L 5/00

(54) **METHOD FOR INDICATING FREQUENCY POSITION OF WIRELESS SIGNAL, BASE STATION AND USER EQUIPMENT**
VERFAHREN ZUR ANZEIGE DER FREQUENZPOSITION EINES DRAHTLOSEN SIGNALS, BASISSTATION UND BENUTZERGERÄT
PROCÉDÉ D'INDICATION DE LA POSITION DE FRÉQUENCE D'UN SIGNAL SANS FIL, STATION DE BASE ET ÉQUIPEMENT UTILISATEUR

(30) Priority: 09.01.2017 CN 201710015357
(43) Date of publication of application: 13.11.2019
(73) Proprietor: Sharp Kabushiki Kaisha, Sakai-shi, Osaka 590-8522 (JP)
(72) Inventor: LIU, Renmao, Shanghai 201206 (CN); ZHANG, Meng, Shanghai 201206 (CN)
(74) Representative: Müller-Boré & Partner Patentanwälte PartG mbB
(86) International application number: PCT/CN2017/117175
(87) International publication number: WO 2018/126886

(56) References cited:
- EP-A1- 3 513 524
- EP-A1- 3 520 526
- WO-A1-2015/188848
- CN-A- 101 374 099
- US-A1- 2008 298 326
- US-A1- 2014 286 286
- SAMSUNG: "Carrier raster and synchronization signal transmission", 3GPP TSG RAN WG1 MEETING #87 R1-1612453, 18 November 2016 (2016-11-18), Reno, USA, pages 1 - 2, XP051176401
- ZTE: "Frequency and Channel Raster Issue in NR", 3GPPTSG RAN WG1 MEETING #86BIS R1-1608967, 14 October 2016 (2016-10-14), Lisbon, Portugal, XP051149020
- SAMSUNG: "Numerology for NR Synchronization Signal", 3GPPTSG RAN WG1 MEETING #87 R1-1612454, 18 November 2016 (2016-11-18), Reno, USA, XP051176402

## Description

### Technical Field

The present application relates to the technical field of wireless communication. More specifically, the present application relates to a method, a base station, and user equipment for indicating the frequency position of a synchronization signal, a carrier, and a sub-band.

### Background

A new research project on 5G technical standards (see non-patent literature: RP-160671: New SID Proposal: Study on New Radio Access Technology) was proposed by NTT DOCOMO at the 3rd Generation Partnership Project (3GPP) RAN#71 plenary meeting held in March 2016, and was approved. The goal of the research project is to develop a New Radio (NR) access technology to meet all of the usage scenarios, requirements, and deployment environments of 5G. NR mainly has three usage scenarios: Enhanced Mobile Broadband Communication (eMBB), massive Machine Type Communication (mMTC), and Ultra Reliable and Low Latency Communications (URLLC). According to the planning of the research project, the standardization of NR is conducted in two stages: the first-stage standardization will be completed by the middle of 2018; the second-stage standardization will be completed by the end of 2019. The first-stage standard specifications need to be forward-compatible with the second-stage standard specifications, while the second-stage standard specifications need to be established on the basis of the first-stage standard specifications and to meet all requirements of 5G NR technical standards.

At the 3GPP RAN1#87 meeting held in Reno, USA in November 2016, the following consensus was reached: the frequency raster of an NR synchronization signal can depend on a carrier frequency range, and at least in the case where the carrier frequency is greater than 6 GHz, the frequency raster of a synchronization signal can be larger than the 100 kHz channel raster of LTE. Moreover, for an NR cell, the center frequency of its synchronization signal can be different from the center frequency of an NR carrier.

US 2014/286286 describes a communication control method in a mobile communication system, comprising: a step of transmitting, from a first base station, a first synchronization signal at a first frequency band in the center of a particular carrier, the first synchronization signal being for use to establish synchronization; and a step of transmitting, from the first base station, a second synchronization signal in a second frequency band different from the first frequency band within the particular carrier, the second synchronization signal being for use to establish synchronization.

EP 3 520 526 A1 describes a method for obtaining numerology information by a user equipment (UE) including detecting synchronization signals, obtaining first numerology information for the synchronization signals, decoding a physical broadcast channel (PBCH) based on the first numerology information, obtaining second numerology information for a physical downlink control channel (PDCCH) according to a result of the decoding, and receiving control information on the PDCCH based on the second numerology information.

EP 3 513 524 A1 describes an apparatus for determining a location of a frequency-domain resource block using frequency spacing values. An apparatus includes a transceiver that communicates with a base unit in a mobile communication network, a processor that determines a first set of frequency locations within a frequency range. Adjacent frequency locations in the first set are spaced with a first spacing value. Additionally, the processor determines a second set of frequency locations within the same frequency range. Here, adjacent frequency locations in the second set are spaced with a second spacing value. The processor calculates a location of a frequency-domain resource block within the frequency range using the first and second spacing values and also controls the transceiver to communicate data on the frequency-domain resource block using the calculated location.

### Summary of Invention

The present application primarily solves the problem of how to determine or indicate a frequency position of an NR synchronization signal, a carrier, and a sub-band.

The above and other problems are solved by a user equipment, a base station, a method performed by a user equipment, and a method performed by a base station, as defined in the independent claims, respectively. Preferred embodiments are set forth in the dependent claims

### Brief Description of Drawings

The above and other features of the present application will become more apparent through the following detailed description made in conjunction with the accompanying drawings, where:
FIG. 1 is a block diagram of a base station according to an embodiment of the present application;
FIG. 2 is a block diagram of user equipment according to an embodiment of the present application;
FIG. 3 is a schematic diagram of a carrier center frequency indication according to an embodiment of the present application;
FIG. 4 is a schematic diagram of a carrier frequency position indication according to an embodiment of the present application;
FIG. 5 is a schematic diagram of a sub-band frequency position indication according to an embodiment of the present application;
FIG. 6 is a schematic diagram of a sub-band frequency position indication according to an embodiment of the present application;
FIG. 7 is a flowchart of a method executed by a base station according to an embodiment of the present application; and
FIG. 8 is a flowchart of a method executed by user equipment according to an embodiment of the present application.

### Detailed Description of Embodiments

The following describes the present disclosure in detail with reference to the accompanying drawings and specific embodiments. It should be noted that the present disclosure should not be limited to the specific embodiments described below. In addition, for simplicity, detailed description of the known art not directly related to the present disclosure is omitted to prevent confusion in understanding the present disclosure.

Some terms included in the present application are described below. Unless otherwise stated, the terms included in the present application are used as defined herein. In addition, the present application is illustrated by taking LTE, eLTE, and NR as examples. It should be noted that the present application is not limited to the LTE, eLTE, and NR. Instead, the present application is also applicable to other wireless communication systems, for example, a 6G wireless communication system.

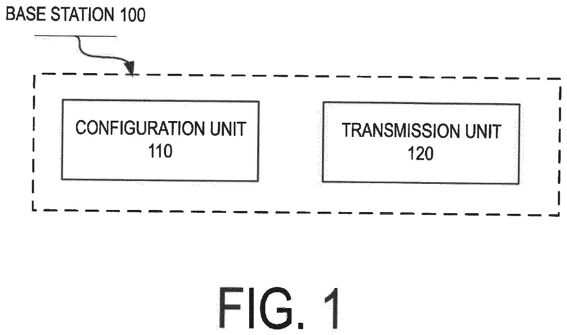

FIG. 1 illustrates a block diagram of a base station 100 according to an embodiment of the present application. As shown in FIG. 1, the base station 100 comprises a configuration unit 110 and a transmission unit 120. Those skilled in the art should understand that the base station 100 may also include other functional units needed for implementing its functions, such as various processors, memories, RF signal processing units, baseband signal processing units, and other physical downlink channel transmission processing units. However, for simplicity, a detailed description of these well-known elements is omitted.

The configuration unit 110 is configured to configure any one or more of a carrier center frequency, a carrier frequency position, and a sub-band frequency position. For example, the configuration unit 110 can perform configuration using any one or more of the following: master information block (MIB), a system information block (SIB), and dedicated radio resource control (RRC) signaling.

In an example, the configuration unit 110 can be configured to determine the candidate frequency position according to a grid of a specific size and a reference sub-carrier spacing, wherein the reference sub-carrier spacing depends on a carrier frequency range. For example, the configuration unit 110 can be configured to indicate a carrier center frequency by an indicator and a physical resource block (PRB) offset.

In an example, the configuration unit 110 can be configured to indicate a carrier frequency position by an indicator, a physical resource block (PRB) offset, and a carrier bandwidth. Alternatively, the configuration unit 110 can also be configured to indicate a carrier frequency position by a physical resource block (PRB) offset and a carrier bandwidth.

In an example, the configuration unit 110 can be configured to indicate a frequency position of a certain sub-band on a carrier by an indicator, a physical resource block (PRB) offset, and a sub-band length. Alternatively, the configuration unit 110 can also be configured to indicate a frequency position of a certain sub-band on a carrier by a physical resource block (PRB) offset, a starting PRB index, and a sub-band length.

In an example, the configuration unit 110 can be configured to define the PRB based on a default sub-carrier spacing or a reference sub-carrier spacing.

In an example, the configuration unit 110 can be configured to: configure, by MIB, a parameter for indicating a carrier center frequency and/or a parameter for indicating a carrier frequency position; configure, by using a SIB, a parameter for indicating a frequency position of a sub-band where a common search space is located; and configure, by using dedicated RRC signaling, a parameter for indicating a frequency position of a sub-band where a UE-specific search space is located.

The transmission unit 120 is configured to transmit a synchronization signal in a candidate frequency position and transmit information configured by the configuration unit.

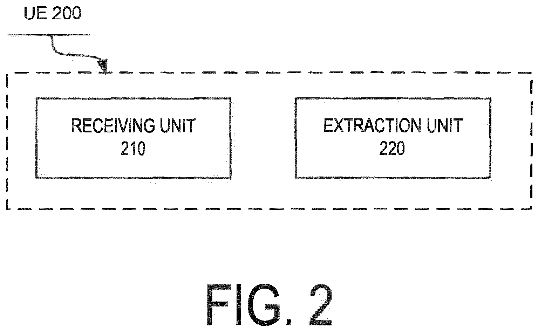

FIG. 2 is a block diagram of a UE 200 according to an embodiment of the present application. As shown in FIG. 2, the UE 200 comprises a receiving unit 210 and an extraction unit 220. Those skilled in the art should understand that the UE 200 can also comprise other functional units needed for implementing its functions, such as various processors, memories, RF signal processing units, baseband signal processing units, and other physical uplink channel transmission processing units. However, for simplicity, a detailed description of these well-known elements is omitted.

The receiving unit 210 is configured to receive a synchronization signal from a candidate frequency position and receive configuration information.

The extraction unit 220 is configured to extract any one or more of a carrier center frequency, a carrier frequency position, and a sub-band frequency position according to the configuration information. For example, the configuration information is configured by using any one or more of the following: master information block (MIB), a system information block (SIB), and dedicated radio resource control (RRC) signaling.

In an example, the extraction unit 220 can be configured to determine the candidate frequency position according to a grid of a specific size and a reference sub-carrier spacing, wherein the reference sub-carrier spacing depends on a carrier frequency range. For example, a carrier center frequency is indicated by an indicator and a physical resource block (PRB) offset.

In an example, a carrier frequency position is indicated by an indicator, a physical resource block (PRB) offset, and a carrier bandwidth. Alternatively, a carrier frequency position can be indicated by a physical resource block (PRB) offset and a carrier bandwidth.

In an example, a frequency position of a certain sub-band on a carrier is indicated by an indicator, a physical resource block (PRB) offset, and a sub-band length. Alternatively, a frequency position of a certain sub-band on a carrier can be indicated by a physical resource block (PRB) offset, a starting PRB index, and a sub-band length.

In an example, the PRB is defined based on a default sub-carrier spacing or a reference sub-carrier spacing.

In an example, a parameter for indicating a carrier center frequency and/or a parameter for indicating a carrier frequency position is configured by MIB; a parameter for indicating a frequency position of a sub-band where a common search space is located is configured by using a SIB; and a parameter for indicating a frequency position of a sub-band where a UE-specific search space is located is configured by using dedicated RRC signaling.

The operations of the base station 100 and the UE 200 are described below by using some specific embodiments.

### Embodiment 1

This embodiment relates to a candidate frequency position of the center frequency of a synchronization signal, or to a frequency raster of a synchronization signal.

### Operation of Base Station 100

In LTE, the center frequency of a synchronization signal and the center frequency of a carrier are at the same position, that is, the two center frequencies are identical. The base station (eNB) 100 transmits a synchronization signal at a certain candidate frequency position of the synchronization signal, and then notifies the size of a downlink bandwidth of the carrier through MIB.

In LTE, there are six channel bandwidths for a carrier: 1.4 MHz, 3 MHz, 5 MHz, 10 MHz, 15 MHz, and 20 MHz, which are represented by 3-bit information in MIB. In NR, the center frequency of a synchronization signal can be inconsistent with the center frequency of a carrier. Moreover, the channel bandwidth of a carrier can be greater than 1 GHz, and for the flexibility of the value of the carrier channel bandwidth, it is possible that the channel bandwidth is of any value, rather than being quantified into several specific values as that in LTE. In addition, the size of a transmission bandwidth of a carrier channel can be represented by the number of physical resource blocks (PRBs). In the frequency domain, one PRB includes 12 sub-carriers. In NR, a plurality of sub-bands can be supported on the same carrier, and different sub-bands have different sub-carrier spacings. Due to the different sub-carrier spacings, PRBs that equally include 12 sub-carriers can have different physical bandwidth sizes. For example, for a sub-band with a sub-carrier spacing of 15 kHz, the physical bandwidth of one PRB including 12 sub-carriers is 180 kHz; and for a sub-band with a sub-carrier spacing of 60 kHz, the physical bandwidth of one PRB including 12 sub-carriers is 720 kHz. Therefore, for carriers or sub-bands of the same channel bandwidth, if the bandwidth of a carrier or sub-band is represented by the number of PRBs, the numbers of PRBs included therein are different with respect to different sub-carrier spacing sizes. For example, for a carrier of a certain bandwidth, if a sub-carrier spacing of 15 kHz is used to calculate the number of PRBs included in the carrier bandwidth, and the calculated number of PRBs of the carrier bandwidth is 100, the number of PRBs of that carrier bandwidth will be 25 when a sub-carrier spacing of 60 kHz is used.

In the discussion on NR at 3GPP, a consensus has been reached on the available sub-carrier spacing, which is 15*2ⁿ kHz, wherein n is an integer. Thus, the sub-carrier spacing of NR can be 3.75 kHz, 7.5 kHz, 15 kHz, 30 kHz, 60 kHz, 120 kHz, and so on. If any of the above sub-carrier spacing values can be used for a sub-carrier spacing of a synchronization signal, the eNB can use one of a plurality of sub-carrier spacings to transmit the synchronization signal at a candidate frequency position of each synchronization signal. In this way, the UE needs to blindly detect synchronization signals of a plurality of sub-carrier spacings at a candidate frequency position of each synchronization signal, thus increasing the complexity of the UE and the time required for the synchronization process. Thus, sub-carrier spacings of one or more synchronization signals can be predefined according to different carrier frequency ranges. As shown in Table 1 below, only one sub-carrier spacing is defined in a certain carrier frequency range. In this way, the eNB only needs to transmit the synchronization signal of one sub-carrier spacing at the candidate frequency position of a certain synchronization signal, thereby reducing the complexity of the UE and synchronization time required by the UE.

**Table 1**

| Carrier frequency range | 0-3 GHz | 3-6 GHz | 6-30 GHz | 30-60 GHz | Above 60 GHz |
|---|---|---|---|---|---|
| Sub-carrier spacing of the synchronization signal | 15 kHz | 30 kHz | 60 kHz | 120 kHz | 240 kHz |

If a plurality of sub-carrier spacings are predefined in a certain frequency range, the eNB can use only one of the plurality of sub-carrier spacings to transmit a synchronization signal when transmitting the synchronization signal. The UE then determines the sub-carrier spacing of the received synchronization signal by blind detection.

Alternatively, the sub-carrier spacing of a synchronization signal can be a default sub-carrier spacing.

In LTE, the center frequency of a synchronization signal is at the same frequency position as the center frequency of a carrier, and a candidate frequency position or frequency raster of the synchronization signal center frequency is 100 kHz. In LTE, a frequency raster is also known as a channel raster. In NR, the candidate frequency position or frequency raster of a synchronization signal center frequency should be an integral multiple of 100 kHz, and should also be an integral multiple of the physical bandwidth of one PRB. For the sub-carrier spacing of a certain synchronization signal, the candidate frequency position or frequency raster of the synchronization signal center frequency should be the least common multiple of 100 kHz and 12 * sub-carrier spacing of the synchronization signal, that is, the center frequency of the synchronization signal is an integral multiple of the least common multiple of 100 kHz and 12 * sub-carrier spacing of the synchronization signal. For example, if the sub-carrier spacing of the synchronization signal is 15 kHz, the candidate frequency position or frequency raster of its center frequency is 900 kHz, that is, the center frequency of the synchronization signal is an integral multiple of 900 kHz. The candidate frequency position or frequency raster of the center frequency of a synchronization signal, as shown in Table 2 below, can be obtained for different carrier frequency ranges. Alternatively, the candidate frequency position or frequency raster of the synchronization signal center frequency should be the least common multiple of 100 kHz and the sub-carrier spacing of the synchronization signal, that is, the center frequency of the synchronization signal is an integral multiple of the least common multiple of 100 kHz and the sub-carrier spacing of the synchronization signal. For example, if the sub-carrier spacing of the synchronization signal is 15 kHz, the candidate frequency position or frequency raster of its center frequency is 300kHz, that is, the center frequency of the synchronization signal is an integral multiple of 300kHz. The candidate frequency position or frequency raster of the center frequency of a synchronization signal, as shown in Table 3 below, can be obtained for different carrier frequency ranges.

The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

**Table 2**

| Carrier frequency range | 0-3 GHz | 3-6 GHz | 6-30 GHz | 30-60 GHz | Above 60 GHz |
|---|---|---|---|---|---|
| Sub-carrier spacing of the synchronization signal | 15 kHz | 30 kHz | 60 kHz | 120 kHz | 240 kHz |
| Frequency raster of the synchronization signal | 900 kHz | 1800 kHz | 3600 kHz | 7200 kHz | 14400 kHz |

**Table 3**

| Carrier frequency range | 0-3 GHz | 3-6 GHz | 6-30 GHz | 30-60 GHz | Above 60 GHz |
|---|---|---|---|---|---|
| Sub-carrier spacing of the synchronization signal | 15 kHz | 30 kHz | 60 kHz | 120 kHz | 240 kHz |
| Frequency raster of the synchronization signal | 300 kHz | 300 kHz | 300 kHz | 600 kHz | 1200 kHz |

Alternatively, the candidate frequency position or frequency raster of a synchronization signal center frequency is determined by the frequency range of a carrier or the frequency band of a carrier. As shown in Table 4 below, the frequency raster of a synchronization signal or the candidate frequency position of the center frequency of a synchronization signal can be obtained from the frequency range of a carrier or the frequency band in which a carrier is located. For example, when the carrier frequency is 3 GHz to 6 GHz, the candidate frequency position or frequency raster of the center frequency of a synchronization signal is 1800 kHz, that is, the center frequency of a synchronization signal is an integral multiple of 1800 kHz. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

**Table 4**

| Carrier frequency range | 0-3 GHz | 3-6 GHz | 6-30 GHz | 30-60 GHz | Above 60 GHz |
|---|---|---|---|---|---|
| Frequency raster of the synchronization signal | 900 kHz | 1800 kHz | 3600 kHz | 7200 kHz | 14400 kHz |

Alternatively, the candidate frequency position or frequency raster of a synchronization signal center frequency is determined by the sub-carrier spacing of a synchronization signal. As shown in Table 5 below, the frequency raster of a synchronization signal or the candidate frequency position of the center frequency of a synchronization signal can be obtained from the sub-carrier spacing of the synchronization signal. For example, when the sub-carrier spacing of a synchronization signal is 30 kHz, the candidate frequency position or frequency raster of the center frequency of the synchronization signal is 1800 kHz, that is, the center frequency of the synchronization signal is an integral multiple of 1800 kHz. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

**Table 5**

| | | | | | |
|---|---|---|---|---|---|
| Sub-carrier spacing of the synchronization signal | 15 kHz | 30 kHz | 60 kHz | 120 kHz | 240 kHz |
| Frequency raster of the synchronization signal | 900 kHz | 1800 kHz | 3600 kHz | 7200 kHz | 14400 kHz |

Alternatively, the candidate frequency position or frequency raster of a synchronization signal center frequency can be determined by the sub-carrier spacing of a synchronization signal and the carrier frequency range. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency can be determined by the 100 kHz channel raster of a synchronization signal, the sub-carrier spacing of a synchronization signal, and the carrier frequency range. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency can be determined by the 100 kHz channel raster of a synchronization signal and the sub-carrier spacing of the synchronization signal. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency can be determined by the 100 kHz channel raster of a synchronization signal and the carrier frequency range. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

### Operation of UE 200

In LTE, the center frequency of a synchronization signal and the center frequency of a carrier are at the same position, that is, the two center frequencies are identical. The user equipment (UE) 200 can acquire the center frequency information of a synchronization signal by detecting the synchronization signal, i.e., acquiring the center frequency information of the carrier. Then, the size of the downlink bandwidth of the carrier can be determined by MIB.

In LTE, there are six channel bandwidths for a carrier: 1.4 MHz, 3 MHz, 5 MHz, 10 MHz, 15 MHz, and 20 MHz, which are represented by 3-bit information in MIB. In NR, the center frequency of a synchronization signal can be inconsistent with the center frequency of a carrier. That is, the center frequency of the carrier cannot be determined according to the center frequency of the synchronization signal acquired by detecting the synchronization signal. Moreover, the channel bandwidth of a carrier can be greater than 1 GHz, and for the flexibility of the value of the carrier channel bandwidth, it is possible that the channel bandwidth is of any value, rather than being quantified into several specific values as that in LTE. In addition, the size of a transmission bandwidth of a carrier channel can be represented by the number of physical resource blocks (PRBs). In the frequency domain, one PRB includes 12 sub-carriers. In NR, a plurality of sub-bands can be supported on the same carrier, and different sub-bands have different sub-carrier spacings. Due to the different sub-carrier spacings, PRBs that equally include 12 sub-carriers can have different physical bandwidth sizes. For example, for a sub-band with a sub-carrier spacing of 15 kHz, the physical bandwidth of one PRB including 12 sub-carriers is 180 kHz; and for a sub-band with a sub-carrier spacing of 60 kHz, the physical bandwidth of one PRB including 12 sub-carriers is 720 kHz. Therefore, for carriers or sub-bands of the same channel bandwidth, if the bandwidth of a carrier or sub-band is represented by the number of PRBs, the numbers of PRBs included therein are different with respect to different sub-carrier spacing sizes. For example, for a carrier of a certain bandwidth, if a sub-carrier spacing of 15 kHz is used to calculate the number of PRBs included in the carrier bandwidth, and the calculated number of PRBs of the carrier bandwidth is 100, the number of PRBs of that carrier bandwidth will be 25 when a sub-carrier spacing of 60 kHz is used.

In the discussion on NR at 3GPP, a consensus has been reached on the available sub-carrier spacing, which is 15*2ⁿ kHz, wherein n is an integer. The sub-carrier spacing of NR can be 3.75 kHz, 7.5 kHz, 15 kHz, 30 kHz, 60 kHz, 120 kHz, and so on. If any of the above sub-carrier spacing values can be used for a sub-carrier spacing of a synchronization signal, the UE needs to blindly detect the synchronization signal of a plurality of sub-carrier spacings at the candidate frequency position of each synchronization signal, thereby increasing the complexity of the UE and the time required for the synchronization process. Thus, sub-carrier spacings of one or more synchronization signals can be predefined according to different carrier frequency ranges. As shown in Table 1 above, only one sub-carrier spacing is defined in a certain carrier frequency range. In this way, the UE only needs to detect the synchronization signal of one sub-carrier spacing at the candidate frequency position of a certain synchronization signal, thereby reducing the complexity of the UE and synchronization time required by the UE.

If a plurality of sub-carrier spacings are predefined in a certain frequency range, the eNB can use only one of the plurality of sub-carrier spacings to transmit a synchronization signal when transmitting the synchronization signal. The UE then determines the sub-carrier spacing of the received synchronization signal by blind detection.

Alternatively, the sub-carrier spacing of a synchronization signal can be a default sub-carrier spacing.

In LTE, the center frequency of a synchronization signal is at the same frequency position as the center frequency of a carrier, and a candidate frequency position or frequency raster of the synchronization signal center frequency is 100 kHz. In LTE, a frequency raster is also known as a channel raster. In NR, the candidate frequency position or frequency raster of a synchronization signal center frequency should be an integral multiple of 100 kHz, and should also be an integral multiple of the physical bandwidth of one PRB. For the sub-carrier spacing of a certain synchronization signal, the candidate frequency position or frequency raster of the synchronization signal center frequency should be the least common multiple of 100 kHz and 12 * sub-carrier spacing of the synchronization signal. For example, if the sub-carrier spacing of the synchronization signal is 15 kHz, the candidate frequency position or frequency raster of its center frequency is 900 kHz, that is, the center frequency of the synchronization signal is an integral multiple of 900 kHz. The candidate frequency position or frequency raster of the center frequency of a synchronization signal, as shown in Table 2 above, can be obtained for different carrier frequency ranges. Alternatively, the candidate frequency position or frequency raster of the synchronization signal center frequency should be the least common multiple of 100 kHz and the sub-carrier spacing of the synchronization signal, that is, the center frequency of the synchronization signal is an integral multiple of the least common multiple of 100 kHz and the sub-carrier spacing of the synchronization signal. For example, if the sub-carrier spacing of the synchronization signal is 15 kHz, the candidate frequency position or frequency raster of its center frequency is 300kHz, that is, the center frequency of the synchronization signal is an integral multiple of 300kHz. The candidate frequency position or frequency raster of the center frequency of a synchronization signal, as shown in Table 3 above, can be obtained for different carrier frequency ranges.

The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency is determined by the frequency range of a carrier or the frequency band of a carrier. As shown in Table 4 above, the frequency raster of a synchronization signal or the candidate frequency position of the center frequency of a synchronization signal can be obtained from the frequency range of a carrier or the frequency band in which a carrier is located. For example, when the carrier frequency is 3 GHz to 6 GHz, the candidate frequency position or frequency raster of the center frequency of a synchronization signal is 1800 kHz, that is, the center frequency of a synchronization signal is an integral multiple of 1800 kHz. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency is determined by the sub-carrier spacing of a synchronization signal. As shown in Table 5 above, the frequency raster of a synchronization signal or the candidate frequency position of the center frequency of a synchronization signal can be obtained from the sub-carrier spacing of the synchronization signal. For example, when the sub-carrier spacing of a synchronization signal is 30 kHz, the candidate frequency position or frequency raster of the center frequency of the synchronization signal is 1800 kHz, that is, the center frequency of the synchronization signal is an integral multiple of 1800 kHz. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency can be determined by the sub-carrier spacing of a synchronization signal and the carrier frequency range. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency can be determined by the 100 kHz channel raster of a synchronization signal, the sub-carrier spacing of a synchronization signal, and the carrier frequency range. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency can be determined by the 100 kHz channel raster of a synchronization signal and the sub-carrier spacing of the synchronization signal. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

Alternatively, the candidate frequency position or frequency raster of a synchronization signal center frequency can be determined by the 100 kHz channel raster of a synchronization signal and the carrier frequency range. The candidate frequency position of the synchronization signal center frequency refers to a frequency or frequency position at which a synchronization signal can be transmitted, i.e., a frequency or frequency position that can be used to transmit a synchronization signal. The candidate frequency position is a set of frequencies or frequency positions that can be used to transmit a synchronization signal and satisfies a certain condition, and the candidate frequency position of a synchronization signal center frequency can also be referred to as a frequency raster or a channel raster of a synchronization signal.

The sub-carrier spacing of a synchronization signal or another predefined sub-carrier spacing in this embodiment is a certain default sub-carrier spacing.

The method for determining the candidate frequency position of a synchronization signal center frequency or the frequency raster of a synchronization signal in this embodiment can also be used to determine the center frequency of a carrier or the channel raster or frequency raster of a carrier.

Alternatively, the spacing among candidate frequency positions of a carrier center frequency can be greater than or less than or equal to the spacing among candidate frequency positions of a synchronization signal center frequency, and one must be an integral multiple of the other. Alternatively, the frequency raster or channel raster of a carrier can be greater than or less than or equal to the frequency raster or channel raster of a synchronization signal center frequency, and one must be an integral multiple of the other.

### Embodiment 2

This embodiment relates to a carrier center frequency and a carrier frequency position.

### Operation of Base Station 100

In LTE, the center frequency of a synchronization signal and the center frequency of a carrier are at the same position, that is, the two center frequencies are identical. The base station (eNB) 100 transmits a synchronization signal at a certain candidate frequency position of the synchronization signal, and then notifies the size of a downlink bandwidth of the carrier through MIB.

In LTE, there are six channel bandwidths for a carrier: 1.4 MHz, 3 MHz, 5 MHz, 10 MHz, 15 MHz, and 20 MHz, which are represented by 3-bit information in MIB. In NR, the center frequency of a synchronization signal can be inconsistent with the center frequency of a carrier. That is, the center frequency of the carrier cannot be determined according to the center frequency of the synchronization signal acquired by detecting the synchronization signal. Moreover, the channel bandwidth of a carrier can be greater than 1 GHz, and for the flexibility of the value of the carrier channel bandwidth, it is possible that the channel bandwidth is of any value, rather than being quantified into several specific values as that in LTE. In addition, the size of a transmission bandwidth of a carrier channel can be represented by the number of physical resource blocks (PRBs). In the frequency domain, one PRB includes 12 sub-carriers. In NR, a plurality of sub-bands can be supported on the same carrier, and different sub-bands have different sub-carrier spacings. Due to the different sub-carrier spacings, PRBs that equally include 12 sub-carriers can have different physical bandwidth sizes. For example, for a sub-band with a sub-carrier spacing of 15 kHz, the physical bandwidth of one PRB including 12 sub-carriers is 180 kHz; and for a sub-band with a sub-carrier spacing of 60 kHz, the physical bandwidth of one PRB including 12 sub-carriers is 720 kHz. Therefore, for carriers or sub-bands of the same channel bandwidth, if the bandwidth of a carrier or sub-band is represented by the number of PRBs, the numbers of PRBs included therein are different with respect to different sub-carrier spacing sizes. For example, for a carrier of a certain bandwidth, if a sub-carrier spacing of 15 kHz is used to calculate the number of PRBs included in the carrier bandwidth, and the calculated number of PRBs of the carrier bandwidth is 100, the number of PRBs of that carrier bandwidth will be 25 when a sub-carrier spacing of 60 kHz is used.

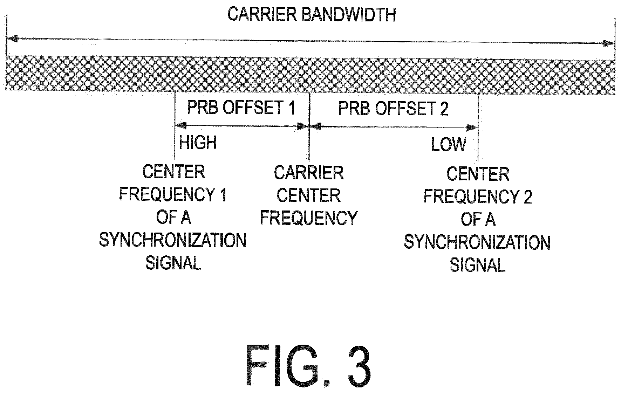

In NR, the base station (eNB) 100 transmits a synchronization signal at a certain candidate frequency position of the synchronization signal, and the center frequency of a carrier can be determined according to the center frequency of a synchronization signal. As shown in FIG. 3, with reference to the center frequency of a synchronization signal, a high/low indicator is used to indicate whether the center frequency of a carrier is higher than the center frequency of a synchronization signal or lower than the center frequency of a synchronization signal, and an offset value is used to indicate the magnitude of an offset of a carrier center frequency from a synchronization signal center frequency. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

For example, the frequency position of a carrier can be indicated by the following two manners:

### Manner 1:

The base station (eNB) 100 transmits a synchronization signal at a certain candidate frequency position of the synchronization signal. The center frequency of a carrier is determined based on the center frequency of a synchronization signal. As shown in FIG. 3, with reference to the center frequency of a synchronization signal, a high/low indicator is used to indicate whether the center frequency of a carrier is higher than the center frequency of a synchronization signal or lower than the center frequency of a synchronization signal, and an offset value is used to indicate the magnitude of an offset of a carrier center frequency from a synchronization signal center frequency. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

After indicating the center frequency of the carrier, the base station (eNB) 100 notifies the frequency position of the entire carrier through the configuration information of the channel bandwidth or the transmission bandwidth of the carrier.

### Manner 2:

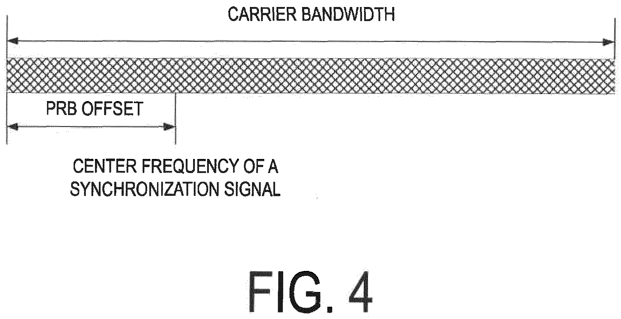

The base station (eNB) 100 transmits a synchronization signal at a certain candidate frequency position of the synchronization signal. Notifying a frequency position of an entire carrier requires only notification of the offset of the lowest frequency or the highest frequency of the carrier from the center frequency of a synchronization channel and the size of the channel bandwidth or the transmission bandwidth of the carrier, without requiring notification of the center frequency of the carrier, as shown in FIG. 4. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

### Operation of UE 200

In LTE, the center frequency of a synchronization signal and the center frequency of a carrier are at the same position, that is, the two center frequencies are identical. The user equipment (UE) can acquire the center frequency information of a synchronization signal by detecting the synchronization signal, i.e., acquiring the center frequency information of the carrier. Then, the size of the downlink bandwidth of the carrier can be determined by MIB.

In LTE, there are six channel bandwidths for a carrier: 1.4 MHz, 3 MHz, 5 MHz, 10 MHz, 15 MHz, and 20 MHz, which are represented by 3-bit information in MIB. In NR, the center frequency of a synchronization signal can be inconsistent with the center frequency of a carrier. That is, the center frequency of the carrier cannot be determined according to the center frequency of the synchronization signal acquired by detecting the synchronization signal. Moreover, the channel bandwidth of a carrier can be greater than 1 GHz, and for the flexibility of the value of the carrier channel bandwidth, it is possible that the channel bandwidth is of any value, rather than being quantified into several specific values as that in LTE. In addition, the size of a transmission bandwidth of a carrier channel can be represented by the number of physical resource blocks (PRBs). In the frequency domain, one PRB includes 12 sub-carriers. In NR, a plurality of sub-bands can be supported on the same carrier, and different sub-bands have different sub-carrier spacings. Due to the different sub-carrier spacings, PRBs that equally include 12 sub-carriers can have different physical bandwidth sizes. For example, for a sub-band with a sub-carrier spacing of 15 kHz, the physical bandwidth of one PRB including 12 sub-carriers is 180 kHz; and for a sub-band with a sub-carrier spacing of 60 kHz, the physical bandwidth of one PRB including 12 sub-carriers is 720 kHz. Therefore, for carriers or sub-bands of the same channel bandwidth, if the bandwidth of a carrier or sub-band is represented by the number of PRBs, the numbers of PRBs included therein are different with respect to different sub-carrier spacing sizes. For example, for a carrier of a certain bandwidth, if a sub-carrier spacing of 15 kHz is used to calculate the number of PRBs included in the carrier bandwidth, and the calculated number of PRBs of the carrier bandwidth is 100, the number of PRBs of that carrier bandwidth will be 25 when a sub-carrier spacing of 60 kHz is used.

In NR, the UE 200 can acquire the center frequency of a synchronization signal by detecting the synchronization signal, and the center frequency of a carrier does not need to be an integral multiple of 100 kHz as that in LTE, that is, the channel raster of the carrier is not required to be defined. It is only required to be based on the center frequency of a synchronization signal to determine the center frequency of a carrier. As shown in FIG. 3, with reference to the center frequency of a synchronization signal, a high/low indicator is used to indicate whether the center frequency of a carrier is higher than the center frequency of a synchronization signal or lower than the center frequency of a synchronization signal, and an offset value is used to indicate the magnitude of an offset of a carrier center frequency from a synchronization signal center frequency. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

For example, the frequency position of a carrier can be acquired by the following two manners:

### Manner 1:

The UE 200 can acquire the center frequency of a synchronization signal by detecting the synchronization signal, and the center frequency of a carrier does not need to be an integral multiple of 100 kHz as that in LTE, that is, the channel raster of the carrier is not required to be defined. It is only required to be based on the center frequency of a synchronization signal to determine the center frequency of a carrier. As shown in FIG. 3, with reference to the center frequency of a synchronization signal, a high/low indicator is used to indicate whether the center frequency of a carrier is higher than the center frequency of a synchronization signal or lower than the center frequency of a synchronization signal, and an offset value is used to indicate the magnitude of an offset of a carrier center frequency from a synchronization signal center frequency. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

After acquiring the center frequency of a carrier, the UE 200 can determine the frequency position of the entire carrier according to configuration information of a channel bandwidth or a transmission bandwidth of the carrier.

### Manner 2:

The UE 200 can acquire the center frequency of a synchronization signal by detecting the synchronization signal, and the center frequency of a carrier does not need to be an integral multiple of 100 kHz as that in LTE, that is, the channel raster of the carrier is not required to be defined. In addition, the UE 200 can determine a frequency position of an entire carrier by learning only the offset of the lowest frequency or the highest frequency of the carrier from the center frequency of a synchronization channel and the size of the channel bandwidth or the transmission bandwidth of the carrier, without being required to learn the center frequency of the carrier, as shown in FIG. 4. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

### Embodiment 3

This embodiment relates to the frequency position of a sub-band.

### Operation of Base Station 100

The frequency position of a sub-band can be indicated in the following three manners:

### Manner 1:

The eNB 100 indicates the frequency position of an entire carrier, which can be performed in the manner described in Embodiment 2 or in other manners. Then, the frequency position of a sub-band can be indicated by a starting PRB index number and the length of the sub-band. The starting PRB index number is one of the PRB index numbers on the entire carrier. The sub-band length can be the number of PRBs continuously distributed on a carrier or the number of sub-carriers. The sub-carrier spacing of the sub-carriers can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing.

### Manner 2:

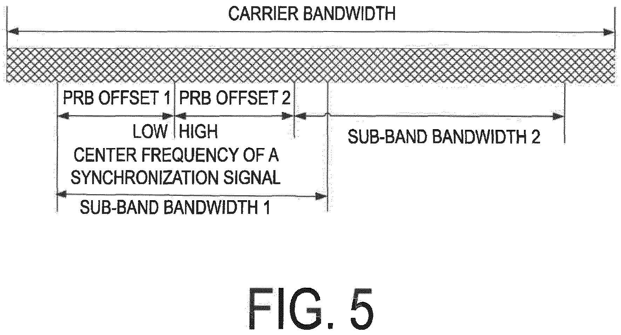

The eNB 100, with reference to the center frequency of a synchronization signal, utilizes a high/low indicator to indicate whether the lowest frequency or the highest frequency of a sub-band is higher than the center frequency of a synchronization signal or lower than the center frequency of a synchronization signal; utilizes an offset value to indicate the magnitude of an offset of the lowest frequency or the highest frequency of the sub-band from a synchronization signal center frequency; and indicates the bandwidth of the sub-band, without being required to indicate the frequency position of the entire carrier. In this way, the eNB 100 can indicate the frequency position of the entire sub-band, as shown in FIG. 5. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

### Manner 3:

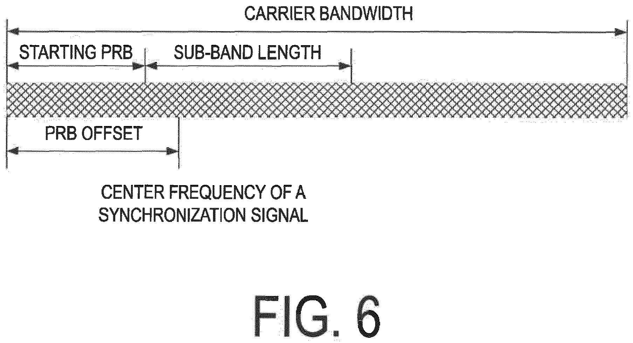

The eNB 100, with reference to the center frequency of a synchronization signal, utilizes an offset value to indicate the magnitude of an offset of the lowest frequency or the highest frequency of a carrier from a synchronization signal center frequency; utilizes a starting PRB index number to indicate the starting PRB position of a sub-band; and indicates the bandwidth of the sub-band, without being required to indicate the frequency position of the entire carrier. In this way, the eNB 100 can indicate the frequency position of the entire sub-band, as shown in FIG. 6. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the offset PRB and the starting PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

### Operation of UE 200

The frequency position of a sub-band can be acquired in the following three manners:

### Manner 1:

The UE 200 acquires the frequency position of an entire carrier first, which can be performed in the manner described in Embodiment 2 or in other manners. Then, the frequency position of a sub-band can be learned by acquiring a starting PRB index number and the length of the sub-band. The starting PRB index number is one of the PRB index numbers on the entire carrier. The sub-band length can be the number of PRBs continuously distributed on a carrier or the number of sub-carriers. The sub-carrier spacing of the sub-carriers can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing.

### Manner 2:

The UE 200 does not need to determine the frequency position of the entire carrier. The UE 200 can determine the center frequency of a synchronization signal by detecting the synchronization signal. Based on the received high/low indicator, it can be determined whether the lowest frequency or the highest frequency of a sub-band is higher than the center frequency of a synchronization signal or lower than the center frequency of a synchronization signal; the magnitude of the offset of the lowest frequency or the highest frequency of the sub-band from a synchronization signal center frequency can be determined according to the received offset value; and the frequency position of the entire sub-band can be determined according to the received sub-band bandwidth, as shown in FIG. 5. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

### Manner 3:

The UE 200 does not need to determine the frequency position of the entire carrier. The UE 200 can determine the center frequency of a synchronization signal by detecting the synchronization signal. The magnitude of the offset of the lowest frequency or the highest frequency of a carrier from a synchronization signal center frequency can be determined according to the received offset value; the starting PRB position of a sub-band can be determined according to the received starting PRB index number; and the frequency position of the entire sub-band can be determined according to the received sub-band bandwidth, as shown in FIG. 6. The unit of measurement of the offset can be a PRB or a certain reference sub-carrier spacing. The reference sub-carrier spacing can be the sub-carrier spacing of a synchronization signal or other predefined sub-carrier spacings or a certain default sub-carrier spacing. The sub-carrier spacing of the offset PRB and the starting PRB can be the sub-carrier spacing of a synchronization signal or other predefined sub-carrier spacings or a certain default sub-carrier spacing. Alternatively, the offset can be measured as the number of PRBs and the number of sub-carriers. For example, the offset of a carrier center frequency from a synchronization signal center frequency is 1205 sub-carriers, and in this case, the offset can also be represented by 100 PRBs + 5 sub-carriers. That is, the integral part obtained from the offset modulus 12 is the number of PRBs, and the remainder is the number of sub-carriers. Alternatively, the offset can be a certain bandwidth frequency value, for example, the offset is 0.025 MHz or of other values. Alternatively, the offset can be an integral multiple of a certain fundamental bandwidth frequency value, for example, the fundamental bandwidth has a frequency value of 0.025 MHz or other values, and the integral multiple value can be -5, -4, -3, -2, -1, 0, 1, 2, 3, 4, 5, and other values. The eNB can configure the integral value through physical layer signaling or master information block (MIB) or a system information block (SIB) or radio resource control (RRC). The offset value is obtained by multiplying the integral value by the fundamental bandwidth frequency value.

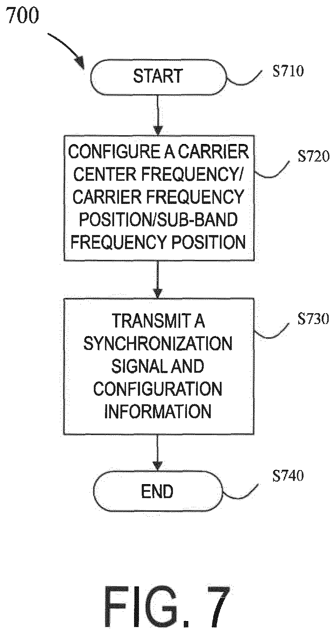

FIG. 7 is a flowchart of a method executed by a base station according to an embodiment of the present application. As shown in FIG. 7, the method 700 starts at step S710.

At step S720, any one or more of a carrier center frequency, a carrier frequency position, and a sub-band frequency position are configured. The configuration can be performed by using any one or more of the following: master information block (MIB), a system information block (SIB), and dedicated radio resource control (RRC) signaling.

At step S730, a synchronization signal is transmitted at a candidate frequency position, and the information configured by the configuration unit is transmitted.

Preferably, the candidate frequency position can be determined according to a grid of a specific size and a reference sub-carrier spacing, wherein the reference sub-carrier spacing depends on a carrier frequency range.

Preferably, the carrier center frequency can be indicated by an indicator and a physical resource block (PRB) offset.

Preferably, the carrier frequency position can be indicated by an indicator, a physical resource block (PRB) offset, and a carrier bandwidth. Alternatively, the carrier frequency position can be indicated by a physical resource block (PRB) offset and a carrier bandwidth.

Preferably, the frequency position of a certain sub-band on a carrier can be indicated by an indicator, a physical resource block (PRB) offset, and a sub-band length. Alternatively, the frequency position of a certain sub-band on a carrier can be indicated by a physical resource block (PRB) offset, a starting PRB index, and a sub-band length.

Preferably, the PRB is defined based on a default sub-carrier spacing or a reference sub-carrier spacing. A parameter for indicating a carrier center frequency and/or a parameter for indicating a carrier frequency position can be configured by MIB; a parameter for indicating a frequency position of a sub-band where a common search space is located can be configured by using a SIB; and a parameter for indicating a frequency position of a sub-band where a UE-specific search space is located can be configured by using dedicated RRC signaling.

Finally, the method 700 ends at step S740.

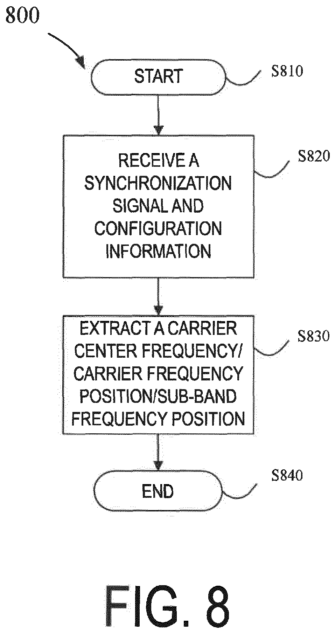

FIG. 8 is a flowchart of a method executed by user equipment according to an embodiment of the present application. As shown in FIG. 8, the method 800 starts at step S810.

At step S820, a synchronization signal is received from a candidate frequency position, and configuration information is received.

At step S830, any one or more of a carrier center frequency, a carrier frequency position, and a sub-band frequency position are extracted according to the configuration information. The configuration information can be configured by using any one or more of the following: master information block (MIB), a system information block (SIB), and dedicated radio resource control (RRC) signaling.

Preferably, the candidate frequency position can be determined according to a grid of a specific size and a reference sub-carrier spacing, wherein the reference sub-carrier spacing depends on a carrier frequency range.

Preferably, a carrier center frequency can be indicated by an indicator and a physical resource block (PRB) offset.

Preferably, a carrier frequency position can be indicated by an indicator, a physical resource block (PRB) offset, and a carrier bandwidth. Alternatively, a carrier frequency position can be indicated by a physical resource block (PRB) offset and a carrier bandwidth.

Preferably, a frequency position of a certain sub-band on a carrier can be indicated by an indicator, a physical resource block (PRB) offset, and a sub-band length. Alternatively, a frequency position of a certain sub-band on a carrier can be indicated by a physical resource block (PRB) offset, a starting PRB index, and a sub-band length.

Preferably, the PRB can be defined based on a default sub-carrier spacing or a reference sub-carrier spacing. A parameter for indicating a carrier center frequency and/or a parameter for indicating a carrier frequency position can be configured by MIB; a parameter for indicating a frequency position of a sub-band where a common search space is located can be configured by using a SIB; and a parameter for indicating a frequency position of a sub-band where a UE-specific search space is located can be configured by using dedicated RRC signaling.

Finally, the method 800 ends at step S840.

The methods and related devices according to the present application have been described above in conjunction with the preferred embodiments. It should be understood by those skilled in the art that the methods shown above are only exemplary. The method according to the present application is not limited to steps or sequences shown above. The network node and user equipment shown above may include more modules; for example, the network node and user equipment may further include modules that can be developed or developed in the future to be applied to a base station or UE, and the like. Various identifiers shown above are only exemplary, and are not meant for limiting the present invention. The present application is not limited to specific information elements serving as examples of these identifiers. Those skilled in the art can make various alterations and modifications according to the teachings of the illustrated embodiments.

It should be understood that the above-described embodiments of the present application may be implemented through software, hardware, or a combination of software and hardware. For example, various components of the base station and user equipment in the above embodiments can be implemented through multiple devices, and these devices include, but are not limited to: an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In this application, the "base station" refers to a mobile communication data and control switching center with large transmission power and wide coverage area, including resource allocation scheduling, data receiving, and transmitting functions. The term "user equipment" refers to a user mobile terminal, such as a terminal device that can perform wireless communication with a base station or a micro base station, including a mobile phone, a notebook, or the like.

In addition, the embodiments of the present application disclosed herein may be implemented on a computer program product. More specifically, the computer program product is a product provided with a computer-readable medium having computer program logic encoded thereon. When being executed on a computing device, the computer program logic provides related operations to implement the above-described technical solutions of the present application. The computer program logic enables a processor to perform the operations (methods) described in the embodiments of the present application when the product is executed on at least one processor of a computing system. Such an arrangement of the present application is typically provided as software, code, and/or other data structures that are configured or encoded on a computer-readable medium, such as an optical medium (for example, a CD-ROM), a floppy disk, or a hard disk, or other media such as firmware or microcode on one or more ROM or RAM or PROM chips, or downloadable software images, shared databases and so on in one or more modules. Software or firmware or such configuration may be installed on a computing device such that one or more processors in the computing device perform the technical solutions described in the embodiments of the present application.

In addition, each functional module or each feature of the base station and the terminal device used in each of the above embodiments may be implemented or executed by a circuit, which is usually one or more integrated circuits. Circuits designed to execute various functions described in this description may include general-purpose processors, digital signal processors (DSPs), application specific integrated circuits (ASICs) or general-purpose integrated circuits, field programmable gate arrays (FPGAs) or other programmable logic devices, discrete gates or transistor logic, or discrete hardware components, or any combination of the above. The general purpose processor may be a microprocessor; or the processor may be an existing processor, a controller, a microcontroller, or a state machine. The above-mentioned general purpose processor or each circuit may be configured with a digital circuit or may be configured with a logic circuit. In addition, when an advanced technology that can replace current integrated circuits emerges due to advances in semiconductor technology, the present application may also use integrated circuits obtained using this advanced technology.

Although the present application has been shown in connection with the preferred embodiments of the present application, it will be understood by those skilled in the art that various modifications, substitutions and alterations may be made to the present application without departing from the spirit and scope of the present application. Accordingly, the present application should not be defined by the above-described embodiments, but should be defined by the appended claims.

The program running on the device according to the present application may be a program that enables the computer to implement the functions of the embodiments of the present application by controlling the central processing unit (CPU). The program or information processed by the program can be stored temporarily in a volatile memory (for example, a random access memory (RAM)), a hard disk drive (HDD), a non-volatile memory (for example, a flash memory), or other memory systems.

The program for implementing the functions of the embodiments of the present application may be recorded on a computer-readable recording medium. The corresponding functions can be achieved by reading programs recorded on the recording medium and executing them by the computer system. The so-called "computer system" may be a computer system embedded in the device, which may include operating systems or hardware (e.g., peripherals). The "computer-readable recording medium" may be a semiconductor recording medium, an optical recording medium, a magnetic recording medium, a recording medium for dynamically storing programs for a short time, or any other recording medium readable by a computer.

Various features or functional modules of the device used in the above embodiments may be implemented or executed by circuits (e.g., monolithic or multi-chip integrated circuits). Circuits designed to execute the functions described in this description may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, a controller, a microcontroller, or a state machine. The circuit may be a digital circuit or an analog circuit. When new integrated circuit technologies that replace existing integrated circuits emerge because of advances in semiconductor technology, the present application may also be implemented using these new integrated circuit technologies.

The embodiments of the present application have been described in detail above with reference to the accompanying drawings. However, the specific structures are not limited to the above embodiments, and the present application also includes any design modifications that do not depart from the main idea of the present application. In addition, various modifications can be made to the present application within the scope of the claims.

## Claims

1. A user equipment, UE, (200) comprising:
a receiving unit (210) configured to receive a master information block, MIB, the receiving unit (210) configured to receive a synchronization signal from a candidate frequency position; and
a processing unit (220) configured to configure an offset between (a) a lowest frequency of a carrier and (b) a center frequency of a synchronization signal, the offset being represented by a number of resource blocks and a number of subcarriers, a unit of measuring the offset being a certain reference sub-carrier spacing defined aside from a subcarrier spacing of the synchronization signal; wherein
the processing unit (220) is configured to:
determine the offset by using the MIB; and
determine a frequency position of the carrier based on the center frequency of the synchronization signal and the offset.

2. A method performed by a user equipment, UE, (200) comprising:
receiving a master information block, MIB;
receiving a synchronization signal from a candidate frequency position; and
configuring an offset between (a) a lowest frequency of a carrier and (b) a center frequency of a synchronization signal, the offset being represented by a number of resource blocks and a number of subcarriers, a unit of measuring the offset being a certain reference sub-carrier spacing defined aside from a subcarrier spacing of the synchronization signal;
determining the offset by using the MIB; and
determining a frequency position of the carrier based on the center frequency of the synchronization signal and the offset.

## Patentansprüche

1. Benutzergerät, UE, (200), umfassend:
eine Empfangseinheit (210), die konfiguriert ist, einen Master-Informationsblock, MIB, zu empfangen, wobei die Empfangseinheit (210) konfiguriert ist, ein Synchronisationssignal von einer Kandidatenfrequenzposition zu empfangen; und
eine Verarbeitungseinheit (220), die konfiguriert ist, einen Offset zwischen (a) einer niedrigsten Frequenz eines Trägers und (b) einer Mittenfrequenz eines Synchronisationssignals zu konfigurieren, wobei der Offset durch eine Anzahl von Ressourcenblöcken und eine Anzahl von Unterträgern dargestellt ist, wobei eine Einheit zum Messen des Offsets ein bestimmter Referenzunterträgerabstand ist, der neben bzw. unabhängig von einem Unterträgerabstand des Synchronisationssignals definiert ist; wobei
die Verarbeitungseinheit (220) konfiguriert ist zum:
Bestimmen des Offsets unter Verwendung des MIB; und
Bestimmen einer Frequenzposition des Trägers basierend auf der Mittenfrequenz des Synchronisationssignals und des Offsets.

2. Verfahren, das von einem Benutzergerät, UE, (200) durchgeführt wird, umfassend:
Empfangen eines Master-Informationsblocks, MIB;
Empfangen eines Synchronisationssignals von einer Kandidatenfrequenzposition; und
Konfigurieren eines Offsets zwischen (a) einer niedrigsten Frequenz eines Trägers und (b) einer Mittenfrequenz eines Synchronisationssignals, wobei der Offset durch eine Anzahl von Ressourcenblöcken und eine Anzahl von Unterträgern dargestellt ist, wobei eine Einheit zum Messen des Offsets ein bestimmter Referenzunterträgerabstand ist, der neben bzw. unabhängig von einem Unterträgerabstand des Synchronisationssignals definiert ist;
Bestimmen des Offsets unter Verwendung des MIB; und
Bestimmen einer Frequenzposition des Trägers basierend auf der Mittenfrequenz des Synchronisationssignals und dem Offset.

## Revendications

1. Équipement utilisateur, UE, (200) comprenant :
un module de réception (210) configuré pour recevoir un bloc d'informations maître, MIB, le module de réception (210) étant configuré pour recevoir un signal de synchronisation d'une position de fréquence candidate ; et
un module de traitement (220) configuré pour configurer un décalage entre (a) une fréquence la plus basse d'une porteuse et (b) une fréquence centrale d'un signal de synchronisation, le décalage étant représenté par un nombre de blocs de ressources et un nombre de sous-porteuses, une unité de mesure du décalage étant un certain espacement entre sous-porteuses de référence défini à part d'un espacement entre sous-porteuses du signal de synchronisation ; dans lequel
le module de traitement (220) est configuré pour :
déterminer le décalage en utilisant le MIB ; et
déterminer une position de fréquence de la porteuse en fonction de la fréquence centrale du signal de synchronisation et du décalage.

2. Procédé réalisé par un équipement utilisateur, UE, (200) comprenant :
recevoir un bloc d'informations maître, MIB ;
recevoir un signal de synchronisation d'une position de fréquence candidate ; et
configurer un décalage entre (a) une fréquence la plus basse d'une porteuse et (b) une fréquence centrale d'un signal de synchronisation, le décalage étant représenté par un nombre de blocs de ressources et un nombre de sous-porteuses, une unité de mesure du décalage étant un certain espacement entre sous-porteuses de référence défini à part d'un espacement entre sous-porteuses du signal de synchronisation ;
déterminer le décalage en utilisant le MIB ; et
déterminer une position de fréquence de la porteuse en fonction de la fréquence centrale du signal de synchronisation et du décalage.
